# EUROPÄISCHE PATENTANMELDUNG

(11) **EP 4 552 829 A1**
(43) Veröffentlichungstag der Anmeldung: **14.05.2025**
(21) Anmeldenummer: 24209845.7
(22) Anmeldetag: 30.10.2024
(51) Int. Cl.: B29C 64/393, B33Y 30/00, B33Y 50/02, B29C 48/385, B29C 48/375, B29C 48/92

(54) **VERFAHREN ZUR STEUERUNG UND/ODER REGELUNG DES BETRIEBS EINER FERTIGUNGSEINRICHTUNG ZUR EXTRUSIONSBASIERTEN FERTIGUNG EINES DREIDIMENSIONALEN BAUTEILS**

(30) Priorität: 13.11.2023 DE 102023131452
(71) Anmelder: Hans Weber Maschinenfabrik GmbH, 96317 Kronach (DE)
(72) Erfinder: Löbel, Tobias, 96317 Kronach (DE); Regel, Klaus, 96317 Kronach (DE); Endrödy, Csaba, 96317 Kronach (DE); Stumpf, Felix, 96317 Kronach (DE)
(74) Vertreter: Hafner & Kohl PartmbB

(57) **Zusammenfassung**

Verfahren zur Steuerung und/oder Regelung des Betriebs einer Fertigungseinrichtung zur extrusionsbasierten additiven Fertigung eines dreidimensionalen Bauteils vermittels einer hardware- und/oder softwaremäßig implementierten Steuer- und/oder Regeleinrichtung, wobei die Fertigungseinrichtung eine Extrusionseinheit zum Aufschmelzen eines Extrusionsmaterials mit einer um eine Drehachse drehbar antreibbaren Extruderschnecke und eine der Extrusionseinheit nachgeschaltet angeordnete Ausbringeinheit zum Ausbringen von aufgeschmolzenem Extrusionsmaterial auf einen Untergrund mit wenigstens einem um eine Drehachse drehbar antreibbaren Ausbringelement aufweist, wobei die Steuer- und/oder Regeleinrichtung die Drehzahl der Extruderschnecke auf Grundlage der Drehzahl des wenigstens einen Ausbringelements einstellt.

## Beschreibung

Die Erfindung betrifft ein Verfahren zur Steuerung und/oder Regelung des Betriebs einer Fertigungseinrichtung zur extrusionsbasierten Fertigung eines dreidimensionalen Bauteils.

Entsprechende Verfahren sind aus dem technischen Gebiet der extrusionsbasierten Fertigung dreidimensionaler Bauteile, im Rahmen welcher dreidimensionale Bauteile durch extrusionsbasiertes sukzessives schichtweises Ausbilden von jeweils eine Querschnittsgeometrie eines herzustellenden dreidimensionalen Bauteils abbildenden Schichten aus einem aufgeschmolzenen Extrusionsmaterial additiv bzw. generativ aufgebaut werden, grundsätzlich bekannt.

Die zur Durchführung entsprechender Verfahren verwendeten Fertigungseinrichtungen umfassen regelmäßig eine Extrusionseinheit zum Aufschmelzen eines Extrusionsmaterials mit einer um eine Drehachse drehbar antreibbaren Extruderschnecke und eine der Extrusionseinheit nachgeschaltet angeordnete Ausbringeinheit zum Ausbringen von aufgeschmolzenem Extrusionsmaterial auf einen Untergrund mit einem um eine Drehachse drehbar antreibbaren Ausbringelement.

Die Steuerung und/oder Regelung des Betriebs entsprechender Fertigungseinrichtungen erfolgt über eine hardware- und/oder softwaremäßig implementierte Steuer- und/oder Regeleinrichtung, welcher im Betrieb der Fertigungseinrichtung ermittelte Prozessparameter zugeleitet werden können, welche der Steuerung und/oder Regelung als Eingangsgrößen zugrunde gelegt werden. Konkret ist es z. B. bekannt, über eine der Ausbringeinheit zugeordnete Sensorik, insbesondere Drucksensorik, Werte, insbesondere Druckwerte, zu erfassen und diese der Steuerung und/oder Regelung des Betriebs einer entsprechenden Fertigungseinrichtung zugrunde zu legen.

Verbesserungswürdig hieran ist nicht nur die Trägheit der Steuerung und/oder Regelung, sondern auch deren Genauigkeit, was sich insbesondere damit erklärt, dass die Steuerung und/oder Regelung auf Basis einer aus einer Abweichung, wie z. B. einer Druckabweichung in der Extrusionseinheit, resultierenden Größe erfolgt und es daher nur schwer möglich ist, über die Steuerung und/oder Regelung die typischerweise im Bereich der Extrusionseinheit liegende Ursache für die Abweichung steuerungs- und/oder regelungstechnisch mit der gewünschten Schnelligkeit und Genauigkeit "in den Griff" zu bekommen.

Der Erfindung liegt daher die Aufgabe zugrunde, ein demgegenüber verbessertes Verfahren zur Steuerung und/oder Regelung des Betriebs einer Fertigungseinrichtung zur extrusionsbasierten Fertigung eines dreidimensionalen Bauteils anzugeben.

Die Aufgabe wird durch die Gegenstände der unabhängigen Ansprüche gelöst. Die hierzu abhängigen Ansprüche betreffen mögliche Ausführungsformen der Gegenstände der unabhängigen Ansprüche.

Ein erster Aspekt der Erfindung betrifft ein Verfahren zur Steuerung und/oder Regelung des Betriebs einer Fertigungseinrichtung zur extrusionsbasierten Fertigung eines dreidimensionalen Bauteils. Das Verfahren ermöglicht es sonach, den Betrieb einer Fertigungseinrichtung zur extrusionsbasierten Fertigung eines dreidimensionalen Bauteils zu steuern und/oder zu regeln. Das Verfahren ermöglicht sonach einen steuerungs- und/oder regelungstechnischen Eingriff in den Betrieb einer Fertigungseinrichtung zur extrusionsbasierten Fertigung eines dreidimensionalen Bauteils.

Eine entsprechende Fertigungseinrichtung ist zur extrusionsbasierten additiven Fertigung eines dreidimensionalen Bauteils, wie z. B. eines technischen Bauteils oder einer technischen Bauteilgruppe, eingerichtet, indem vermittels der Fertigungseinrichtung extrusionsbasiert ein sukzessives Aufbringen eines aufgeschmolzenen Extrusionsmaterials, wie z. B. eines aufgeschmolzenen thermoplastischen Kunststoffmaterials, auf einen Untergrund erfolgt. Konkret kann die Fertigungseinrichtung eingerichtet sein, ein dreidimensionales Bauteil extrusionsbasiert durch sukzessives schichtweises Ausbilden von mehreren jeweils eine Querschnittsgeometrie des Bauteils abbildenden Schichten auf einen Untergrund additiv bzw. generativ aufzubauen. Das Ausbilden der jeweils eine Querschnittsgeometrie des Bauteils abbildenden Schichten auf einen Untergrund erfolgt durch sukzessives Aufbringen von Materialbahnen bzw. -strängen aus dem aufgeschmolzenen Extrusionsmaterial auf den Untergrund. Bei dem Untergrund kann es sich sonach z. B. um eine Bauplattform oder um eine bereits aufgebrachte Lage bzw. Schicht des Extrusionsmaterials handeln.

Die Fertigungseinrichtung umfasst eine Extrusionseinheit, welche zum Aufschmelzen bzw. Plastifizieren eines Extrusionsmaterials eingerichtet ist. Die Extrusionseinheit umfasst typischerweise eine, gegebenenfalls auch als Extruderzylinder zu bezeichnende bzw. zu erachtende, Extruderkammer sowie wenigstens eine in der Extruderkammer angeordnete, eine Extruderachse definierende Extruderschnecke. Die Extruderkammer umfasst typischerweise eine oder mehrere die Extruderkammer begrenzende bzw. definierende Extruderkammerwandungen. Die Extruderkammer kann unterschiedlich funktionalisierte Bereiche bzw. Zonen, wie z. B. einen, z. B. trichterartigen bzw. -förmigen, Befüllbereich, über welchen ein Befüllen der Extruderkammer mit aufzuschmelzendem Extrusionsmaterial erfolgt, einen Aufschmelzbereich, in welchem das Aufschmelzen des in die Extruderkammer gefüllten aufzuschmelzenden Extrusionsmaterials erfolgt, sowie einen Ausströmbereich, über welchen aufgeschmolzenes Extrusionsmaterial aus der Extruderkammer ausströmen kann, aufweisen. Die Extruderschnecke ist um eine typischerweise mit der Extruderachse zusammenfallende Drehachse drehbar antreibbar bzw. gelagert. Zum Antrieb der Extruderschnecke, d. h. zum Überführen der Extruderschnecke in eine Drehbewegung um die Drehachse, ist der Extruderschnecke typischerweise eine Antriebseinheit zugeordnet. Die Antriebseinheit ist insbesondere eingerichtet, die Extruderschnecke mit einer bestimmten Drehzahl bzw. in einem bestimmten Drehzahlbereich in eine Drehbewegung um die Drehachse zu versetzen. Die Antriebseinheit kann ein hardware- und/oder softwaremäßig implementiertes Steuergerät umfassen. Die Antriebseinheit kann z. B. als Motor, insbesondere als Elektromotor, ausgebildet sein oder wenigstens einen solchen umfassen.

Die Extrusionseinheit kann in wenigstens einem Bewegungsfreiheitsgrad relativ zu dem bzw. einem Untergrund bewegbar gelagert sein. Zur Realisierung von Bewegungen der Extrusionseinheit kann die Fertigungseinrichtung eine Antriebseinrichtung und/oder eine Führungseinrichtung umfassen. Eine entsprechende, z. B. als Antriebsmotor implementierte, Antriebseinrichtung kann zur Erzeugung von die Extrusionseinheit in eine Bewegung entlang wenigstens einer translatorischen und/oder rotatorischen Bewegungsbahn versetzenden Antriebskraft eingerichtet sein. Eine entsprechende, z. B. als Führungsschienenanordnung implementierte, Führungseinrichtung kann zur Bestimmung entsprechender Bewegungsbahnen eingerichtet sein. Einer entsprechenden Antriebs- und/oder Führungseinrichtung kann eine Steuereinrichtung zugeordnet sein, welche zur Erzeugung von den Betrieb der Antriebs- bzw. Führungseinrichtung steuernden Daten eingerichtet ist, über welche sich ein- oder mehrdimensionale Bewegungsbahnen der Extrusionseinheit realisieren lassen. Konkret kann eine entsprechende Antriebs- bzw. Führungseinrichtung z. B. als ein- oder mehrachsige Gantryanordnung ausgeführt sein oder eine solche umfassen, an welcher die Extrusionseinheit in ein oder mehreren Bewegungsfreiheitsgraden bewegbar gelagert angeordnet oder ausgebildet ist. Alternativ kann eine entsprechende Antriebs- bzw. Führungseinrichtung z. B. als ein- oder mehrachsige Roboteranordnung ausgeführt sein oder eine solche umfassen, an welcher die Extrusionseinheit in ein oder mehreren Bewegungsfreiheitsgraden bewegbar gelagert angeordnet oder ausgebildet ist.

Die Fertigungseinrichtung weist weiterhin eine der Extrusionseinheit nachgeschaltet angeordnete oder ausgebildete Ausbringeinheit auf, welche zum Austragen bzw. Aufbringen eines vermittels der Extrusionseinheit aufgeschmolzenen Extrusionsmaterials auf einen Untergrund eingerichtet ist. Die Ausbringeinheit ist sonach eingerichtet, ein aufgeschmolzenes Extrusionsmaterial, insbesondere bahnförmig bzw. -strangförmig, kontinuierlich oder quasikontinuierlich, d. h. z. B. in einer kontinuierlichen oder quasi-kontinuierlichen Material- bzw. Schmelzebahn bzw. in einem kontinuierlichen oder quasi-kontinuierlichen Material- bzw. Schmelzestrang, auf einen Untergrund auszutragen bzw. aufzubringen. Die Ausbringeinheit kann sonach wenigstens einen Ausgang, insbesondere in Form einer düsenartigen bzw. -förmigen Ausströmöffnung aufweisen, über welche(n) aufgeschmolzenes Extrusionsmaterial auf einen Untergrund austragbar bzw. aufbringbar ist. Die Ausströmöffnung kann gegebenenfalls in ihrer Querschnittsgeometrie variierbar sein.

Die Ausbringeinheit stellt typischerweise eine zu der Extrusionseinheit gesonderte Bau- bzw. Funktionseinheit der Fertigungseinrichtung. Die Ausbringeinheit und die Extrusionseinheit sind gleichwohl strömungstechnisch miteinander koppelbar bzw. gekoppelt, insbesondere derart, dass vermittels der Extrusionseinheit aufgeschmolzenes Extrusionsmaterial von einem Ausgang der Extrusionseinheit in einen Eingang der Ausbringeinheit strömen kann, um über einen Ausgang der Ausbringeinheit auf einen Untergrund ausgetragen bzw. aufgebracht werden zu können. Die Extrusionseinheit, d. h. insbesondere die Extruderkammer, umfasst sonach typischerweise wenigstens einen Ausgang, z. B. in Form einer düsenartigen bzw. -förmigen Ausströmöffnung, über welche(n) aufgeschmolzenes Extrusionsmaterial aus der Extrusionseinheit in Richtung eines Eingangs der Ausbringeinheit, z. B. in Form einer Einströmöffnung, ausströmen kann. Die Ausbringeinheit umfasst entsprechend typischerweise wenigstens einen Eingang, z. B. in Form einer düsenartigen bzw. - förmigen Einströmöffnung, über welche(n) aufgeschmolzenes Extrusionsmaterial aus der Extrusionseinheit in die Ausbringeinheit einströmen kann. Wie erwähnt, kann die Ausbringeinheit zudem wenigstens einen Ausgang, insbesondere in Form einer düsenartigen bzw. -förmigen Ausströmöffnung aufweisen, über welche(n) aufgeschmolzenes Extrusionsmaterial auf einen Untergrund austragbar bzw. aufbringbar ist.

Die Ausbringeinheit umfasst wenigstens ein um eine Drehachse drehbar antreibbares bzw. gelagertes Ausbringelement. Zum Antrieb des wenigstens einen Ausbringelements, d. h. zum Überführen des wenigstens einen Ausbringelements in eine Drehbewegung um die Drehachse, ist dem wenigstens einen Ausbringelement typischerweise eine Antriebseinheit zugeordnet. Die Antriebseinheit ist insbesondere eingerichtet, dass wenigstens eine Ausbringelement mit einer bestimmten Drehzahl bzw. in einem bestimmten Drehzahlbereich in eine Drehbewegung um die Drehachse zu versetzen. Die Antriebseinheit kann ein hardware- und/oder softwaremäßig implementiertes Steuergerät umfassen. Die Antriebseinheit kann z. B. als Motor, insbesondere als Elektromotor, ausgebildet sein oder wenigstens einen solchen umfassen.

Die Ausbringeinheit kann als eine in wenigstens einem Förderparameter, insbesondere der Fördergeschwindigkeit bzw. -menge, variierbare Fördereinheit ausgebildet sein oder eine solche umfassen. Mithin ist es möglich, die Austragsgeschwindigkeit oder -menge des Extrusionsmaterials vermittels der Ausbringeinheit, insbesondere unabhängig von der Extrusionseinheit, gezielt zu beeinflussen. Eine entsprechende Fördereinheit kann konkret z. B. als eine Pumpeneinheit, insbesondere als eine Zahnradpumpeneinheit, ausgebildet sein oder eine solche umfassen. Bei dem wenigstens einen Ausbringelement kann es sich konkret sonach um wenigstens ein drehbar antreibbares Bauelement, wie z. B. um ein Zahnradelement, einer entsprechenden Förder- bzw. Pumpeneinheit handeln.

Über eine entsprechende Förder- bzw. Pumpeneinheit kann sich eine Zwangsförderung des Extrusionsmaterials aus der Extrusionseinheit realisieren lassen; eine entsprechende Förder- bzw. Pumpeneinheit kann sonach eingerichtet sein, eine Zwangsförderung von aufgeschmolzenem Extrusionsmaterial aus der Extrusionseinheit zu realisieren.

Die Fertigungseinrichtung umfasst weiterhin eine hardware- und/oder softwaremäßig implementiert Steuer- und/oder Regeleinrichtung, welche zur Steuerung und/oder Regelung des Betriebs der Fertigungseinrichtung eingerichtet ist. Die Steuer- und/oder Regeleinrichtung kann insbesondere eingerichtet sein, der Steuerung und/oder Regelung des Betriebs der Fertigungseinrichtung eine oder mehrere Eingangsgrößen zugrunde zu legen und aus diesen computerimplementiert bzw. datenverarbeitungsmäßig Steuer- und/oder Regelgrößen für die Steuerung und/oder Regelung des Betriebs der Fertigungseinrichtung zu erzeugen. Die Steuer- und/oder Regeleinrichtung kann sonach, insbesondere über eine oder mehrere Daten- bzw. Kommunikationsschnittstellen, mit einer oder mehreren Einheiten der Fertigungseinrichtung kommunizieren, welche entsprechende Eingangsgrößen bereitstellen, aus welchen die Steuer- und/oder Regeleinrichtung computerimplementiert bzw. datenverarbeitungsmäßig Steuer- und/oder Regelgrößen für die Steuerung und/oder Regelung des Betriebs der Fertigungseinrichtung erzeugt. Insbesondere kann die Steuer- und/oder Regeleinrichtung mit der Extrusionseinheit, d. h. insbesondere einem entsprechenden Steuergerät einer Antriebseinheit der Extrusionseinheit, und mit der Ausbringeinheit, d. h. insbesondere einem entsprechenden Steuergerät der Antriebseinheit der Ausbringeinheit, kommunizieren, welche sonach entsprechende Eingangsgrößen bereitstellen können, aus welchen die Steuer- und/oder Regeleinrichtung computerimplementiert bzw. datenverarbeitungsmäßig Steuer- und/oder Regelgrößen für die Steuerung und/oder Regelung des Betriebs der Fertigungseinrichtung erzeugt.

Vermittels der Steuer- und/oder Regeleinrichtung lässt sich sonach ein Verfahren zur Steuerung und/oder Regelung des Betriebs der Fertigungseinrichtung implementieren. Das Verfahren zeichnet sich dadurch aus, dass die Drehzahl der Extruderschnecke auf Grundlage der Drehzahl des wenigstens einen um die Drehachse drehbaren Ausbringelements eingestellt wird. Verfahrensgemäß ist es sonach vorgesehen, die Drehzahl der Extruderschnecke auf Grundlage der Drehzahl des wenigstens einen Ausbringelements einzustellen. Die Einstellung beinhaltet insbesondere ein Steuern und/oder Regeln der Drehzahl der Extruderschnecke auf Grundlage der Drehzahl des wenigstens einen Ausbringelements. Verfahrensgemäß erfolgt sonach typischerweise ein Steuern und/oder Regeln der der Drehzahl der Extruderschnecke auf Grundlage der Drehzahl des wenigstens einen Ausbringelements. Das Verfahren sieht sonach eine Kopplung, d. h. insbesondere eine direkte Kopplung, der Drehzahl der Extruderschnecke mit der Drehzahl des wenigstens einen Ausbringelements vor. Die Kopplung kann vordefiniert sein, sodass einer bestimmten Drehzahl oder einem bestimmten Drehzahlbereich des wenigstens einen Ausbringelements, diese(r) kann einer Drehzahl bzw. einem Drehzahlbereich einer dem wenigstens einen Ausbringelement zugeordneten Antriebseinheit entsprechen, eine vordefinierte Drehzahl bzw. ein vordefinierter Drehzahlbereich der Extruderschnecke, diese(r) kann einer Drehzahl bzw. einem Drehzahlbereich einer der Extruderschnecke zugeordneten Antriebseinheit entsprechen, zugeordnet ist bzw. wird. Mithin kann eine bestimmte Drehzahl oder ein bestimmter Drehzahlbereich des wenigstens einen Ausbringelements verfahrensgemäß vordefiniert mit einer bestimmten Drehzahl oder einem Drehzahlbereich der Extruderschnecke verknüpft bzw. korreliert sein.

Verfahrensgemäß kann mithin einer im Betrieb der Fertigungseinrichtung gegebenen Drehzahl oder einem Drehzahlbereich des wenigstens einen Ausbringelements, diese(r) kann, wie erwähnt, einer Drehzahl bzw. einem Drehzahlbereich einer dem wenigstens einen Ausbringelement zugeordneten Antriebseinheit entsprechen, eine bestimmte Drehzahl bzw. einem bestimmten Drehzahlbereich der Extruderschnecke, diese(r) kann, wie ebenso erwähnt, einer Drehzahl bzw. einem Drehzahlbereich einer der Extruderschnecke zugeordneten Antriebseinheit entsprechen, zugeordnet und der Betrieb der Fertigungseinrichtung auf Grundlage dieser Zuordnung gesteuert bzw. geregelt werden. Die beschriebene Kopplung kann die Realisierung eines definierten Verhältnisses der Drehzahl des wenigstens einen Ausbringelements und der Drehzahl der Extruderschnecke ermöglichen. Das Verhältnis kann im Hinblick auf eine bestimmte Zielgröße, d. h. insbesondere eine bestimmte Steuer- und/oder Regelgröße, respektive deren Erreichung bzw. Aufrechterhaltung gewählt sein. Die verfahrensgemäße Steuerung und/oder Regelung des Betriebs der Fertigungseinrichtung kann sonach im Allgemeinen im Hinblick auf eine Zielgröße respektive deren Erreichung bzw. Aufrechterhaltung durchgeführt werden.

Die beschriebene Kopplung der Drehzahl des wenigstens einen Ausbringelements mit der Drehzahl der Extruderschnecke ermöglicht nicht nur eine weniger träge und damit deutlich dynamische Steuerung und/oder Regelung des Betriebs der Fertigungseinrichtung, sondern auch eine genauere Steuerung und/oder Regelung des Betriebs der Fertigungseinrichtung, da im Betrieb der Fertigungseinrichtung etwaig entstehende Drehzahländerungen bzw. -schwankungen des wenigstens einen Ausbringelements, welche z. B. auf Druckänderungen bzw. -schwankungen der Extruderschnecke zurückzuführen sein können, unmittelbar zur Anpassung der Drehzahl der Extruderschnecke verwendet werden können.

Die, insbesondere durch entsprechende Programmierung, zur Durchführung des Verfahrens eingerichtete Steuer- und/oder Regeleinrichtung ist sonach im Allgemeinen eingerichtet, den Betrieb der Extruderschnecke auf Grundlage der Drehzahl des wenigstens einen Ausbringelements einzustellen, d. h. insbesondere zu steuern oder zu regeln. Insbesondere ist die Steuer- und/oder Regeleinrichtung eingerichtet, die Drehzahl der Extruderschnecke auf Grundlage der Drehzahl des wenigstens einen Ausbringelements in der beschriebenen Weise einzustellen, d. h. insbesondere zu steuern und/oder zu regeln. Die Steuer- und/oder Regeleinrichtung kann hierfür, wie erläutert, mit der dem wenigstens einen Ausbringelement zugeordneten Antriebseinheit der Ausbringeinheit und der der Extruderschnecke zugeordneten Antriebseinheit der Extrusionseinheit kommunizieren, insbesondere derart, dass sie eine Drehzahl bzw. einen Drehzahlbereich des wenigstens einen Ausbringelements als Eingangsgröße erhält und diesen basierend auf einer vordefinierten Kopplung der Drehzahl bzw. des Drehzahlbereichs des wenigstens einen Ausbringelements mit einer Drehzahl bzw. einem Drehzahlbereich der Extruderschnecke in eine Drehzahl bzw. einen Drehzahlbereich der Extruderschnecke als Ausgangsgröße umwandelt.

Alternativ oder ergänzend kann eine die Drehzahl bzw. einen Drehzahlbereich des wenigstens einen Ausbringelements, insbesondere indirekt, beschreibende Eingangsgröße, wie z. B. ein Drehmoment der Antriebseinheit der Ausbringeinheit, eine Leistungsaufnahme der Antriebseinheit der Ausbringeinheit, ein Energieverbrauch, insbesondere ein Stromverbrauch, der Antriebseinheit der Ausbringeinheit, etc. verwendet werden. Analoges gilt für die Ausgangsgröße; mithin kann die Ausgangsgröße z. B. ein Drehmoment der Antriebseinheit der Extrusionseinheit, eine Leistungsaufnahme der Antriebseinheit der Extrusionseinheit, ein Energieverbrauch, insbesondere ein Stromverbrauch, Antriebseinheit der Extrusionseinheit, etc. sein.

Es wurde erwähnt, dass die verfahrensgemäße Steuerung und/oder Regelung des Betriebs der Fertigungseinrichtung im Allgemeinen im Hinblick auf eine Zielgröße respektive deren Erreichung bzw. Aufrechterhaltung durchgeführt werden kann. In einer Ausführungsform kann die Steuer- und/oder Regeleinrichtung die Einstellung der Drehzahl der Extruderschnecke auf Grundlage der Drehzahl des wenigstens einen Ausbringelements sonach unter Berücksichtigung einer Zielgröße bzw. eines Zielkriteriums vornehmen. Die Zielgröße bzw. das Zielkriterium kann z. B. ein bestimmtes Druckniveau des Extrusionsmaterials an einem Eingang der Ausbringeinheit und/oder in einem Bereich zwischen dem Eingang der Ausbringeinheit und einem der Ausbringeinheit zugewandten Ausgang der Extrusionseinheit und/oder an einem der Ausbringeinheit zugewandten Ausgang der Extrusionseinheit betreffen. Die verfahrensgemäß erfolgende Einstellung der Drehzahl der Extruderschnecke auf Grundlage der Drehzahl des wenigstens einen Ausbringelements kann sonach im Hinblick auf ein bestimmtes Druckniveau des Extrusionsmaterials an einem Eingang der Ausbringeinheit und/oder in einem Bereich zwischen dem Eingang der Ausbringeinheit und einem der Ausbringeinheit zugewandten Ausgang der Extrusionseinheit und/oder an einem der Ausbringeinheit zugewandten Ausgang der Extrusionseinheit erfolgen. Bei dem bestimmten Druckniveau kann es sich insbesondere um ein (zeitlich) konstantes Druckniveau handeln. Ein (zeitlich) konstantes Druckniveau kann, etwa im Hinblick auf die Gewährleistung eines (weitgehend) homogenen Material- bzw. Schmelzestrangs, einen besonders stabilen Betrieb der Fertigungseinrichtung ermöglichen.

In einer Ausführungsform des Verfahrens kann die Steuer- und/oder Regeleinrichtung eine den aktuellen und/oder künftigen Druck innerhalb der Extrusionseinheit und/oder Ausbringeinheit beschreibende Druckinformation berücksichtigen und der Steuerung und/oder Regelung des Betriebs der Fertigungseinrichtung als zusätzlichen Eingangsparameter zugrunde legen. Alternativ oder ergänzend kann die Steuer- und/oder Regeleinrichtung eine die aktuelle und/oder künftige Temperatur innerhalb der Extrusionseinheit und/oder Ausbringeinheit beschreibende Temperaturinformation berücksichtigen und der Steuerung und/oder Regelung des Betriebs der Fertigungseinrichtung als zusätzlichen Eingangsparameter zugrunde legen. Alternativ oder ergänzend kann die Steuer- und/oder Regeleinrichtung eine einen aktuellen und/oder künftigen Materialparameter, wie z. B. das Fließverhalten, die Viskosität, etc., innerhalb der Extrusionseinheit und/oder Ausbringeinheit beschreibende Materialparameterinformation berücksichtigen und der Steuerung und/oder Regelung des Betriebs der Fertigungseinrichtung als zusätzlichen Eingangsparameter zugrunde legen. Die Druckinformation und/oder die Temperaturinformation und/oder die Materialparameterinformation können durch entsprechende Erfassungseinrichtungen, wie z. B. Sensoriken, erfasst oder aus von diesen erzeugten Signalen ermittelt werden. Die Fertigungseinrichtung kann sonach wenigstens eine Erfassungseinrichtung zur Erfassung einer entsprechenden Druckinformation und/oder einer entsprechenden Temperaturinformation und/oder einer entsprechenden Materialparameterinformation umfassen. In einer Ausführungsform des Verfahrens kann die Steuer- und/oder Regeleinrichtung die Drehzahl der Extruderschnecke auf Grundlage der Drehzahl des wenigstens einen Ausbringelements einstellen, indem eine vermittels einer Erfassungseinrichtung, wie z. B. eines Drehzahlsensors, erfasste Drehzahl des wenigstens einen Ausbringelements einer dieser erfassten Drehzahl gemäß wenigstens einer Zuordnungsfunktion zugeordneten Drehzahl der Extruderschnecke zugeordnet wird. Die Steuer- und/oder Regeleinrichtung kann im Rahmen der Durchführung des Verfahrens sonach wenigstens eine Zuordnungsfunktion verwenden, gemäß welcher bestimmte Drehzahlen bzw. Drehzahlbereiche des wenigstens einen Ausbringelements mit bestimmten Drehzahlen bzw. Drehzahlbereichen der Extruderschnecke korreliert sind, sodass jeder erfassten Drehzahl bzw. jedem erfassten Drehzahlbereich des wenigstens einen Ausbringelements eine bestimmte Drehzahl bzw. ein bestimmter Drehzahlbereich der Extruderschnecke zugeordnet ist, welcher im Rahmen der Steuerung und/oder Regelung des Betriebs der Fertigungseinrichtung angewendet wird. Wie erläutert, kann derart eine Einstellung der Drehzahl der Extruderschnecke auf Grundlage der Drehzahl des wenigstens einen Ausbringelements erfolgen. Die Zuordnungsfunktion kann sonach eine vordefinierte Zuordnung von Drehzahlen bzw. Drehzahlbereichen der Extruderschnecke zu Drehzahlen bzw. Drehzahlbereichen des wenigstens einen Ausbringelements, und umgekehrt, beinhalten. Die Zuordnungsfunktion kann, z. B. in Form eines eine entsprechende Zuordnung beschreibenden Datensatzes, in einer der Steuer- und/oder Regeleinrichtung zugeordneten oder zugehörigen Datenspeichereinrichtung gespeichert sein bzw. werden.

Die Zuordnungsfunktion kann computerimplementiert, d. h. insbesondere auf Grundlage eines computerimplementiert erstellten Modells, wie z. B. eines vermittels eines oder mehreren Algorithmen oder Modellen der künstlichen Intelligenz bzw. des maschinellen Lernens (machine learning), erzeugt werden. Entsprechende Algorithmen oder Modelle können sonach ein oder mehrere, ein- oder mehrschichtige künstliche neuronale Netze beinhalten. Entsprechende künstliche neuronale Netze können als Eingangsgrößen Drehzahlen bzw. Drehzahlbereiche des wenigstens einen Ausbringelements erhalten und aus diesen Drehzahlen bzw. Drehzahlbereiche der wenigstens einen Extruderschnecke ermitteln.

Die Zuordnungsvorschrift kann nicht nur computerimplementiert erzeugt, sondern gegebenenfalls auch computerimplementiert angepasst bzw. verändert werden. Mithin kann eine Zuordnungsvorschrift z. B. vermittels Algorithmen oder Modellen der künstlichen Intelligenz bzw. des maschinellen Lernens, insbesondere im Betrieb der Fertigungseinrichtung, automatisierbar oder automatisch angepasst werden. Derart kann z. B. auf veränderliche Prozess- oder Materialparameter reagiert werden, welche sonach zu einer automatisierbaren oder automatischen Anpassung eines einer Zuordnungsvorschrift zugrunde liegenden Modells führen können.

Allgemein gilt, dass die Steuer- und/oder Regeleinrichtung mit einer Datenspeichereinrichtung verbunden sein kann, in welcher bestimmte Drehzahlen oder Drehzahlbereiche des wenigstens einen Ausbringelements mit bestimmten Drehzahlen oder Drehzahlbereichen der Extruderschnecke, insbesondere über wenigstens eine im Weiteren näher erläuterte Koppelfunktion, verknüpft bzw. korreliert sind.

In einer Ausführungsform kann die Zuordnungsfunktion sonach wenigstens eine Koppelfunktion sein oder eine solchen umfassen, über welche eine erfasste Drehzahl bzw. ein erfasster Drehzahlbereich des wenigstens einen Ausbringelements einer Drehzahl bzw. einem Drehzahlbereich der Extruderschnecke zugeordnet ist. Die wenigstens eine Koppelfunktion kann sonach eine Kopplung einer erfassten Drehzahl bzw. eines erfassten Drehzahlbereichs des wenigstens einen Ausbringelements mit einer bestimmten Drehzahl bzw. einem bestimmten Drehzahlbereich der Extruderschnecke beschreiben bzw. definieren; eine erfasste Drehzahl bzw. ein erfasster Drehzahlbereich des wenigstens einen Ausbringelements kann so mit einer Drehzahl bzw. einem Drehzahlbereich der Extruderschnecke gekoppelt sein bzw. werden. Eine entsprechende Koppelfunktion kann ein oder mehrere, insbesondere statische oder dynamische, Koppelfaktoren beinhalten, über welche eine erfasste Drehzahl bzw. ein erfasster Drehzahlbereich des wenigstens einen Ausbringelements einer Drehzahl bzw. einem Drehzahlbereich der Extruderschnecke zugeordnet wird.

Der Begriff Koppelfunktion beinhaltet sonach im Allgemeinen nicht nur einen Faktor, wie z. B. einen numerischen Wert, über welchen sich eine erfasste Drehzahl bzw. ein erfasster Drehzahlbereich des wenigstens einen Ausbringelements z. B. durch eine Umrechnung bzw. eine mathematische Operation, wie z. B. durch eine Multiplikation, einer Drehzahl bzw. einem Drehzahlbereich der Extruderschnecke zuordnen bzw. in eine solche umrechnen lässt, sondern kann vielmehr auch ein- oder mehrdimensionale Zuordnungskennfelder bzw. Zuordnungsarrays oder Zuordnungstabellen beinhalten, in welchen neben erfassten Drehzahlen bzw. Drehzahlbereichen des wenigstens einen Ausbringelements und diesen zugeordneten Drehzahlen bzw. Drehzahlbereichen der Extruderschnecke weitere Parameter, d. h. insbesondere anlagen-, material- oder prozessspezifische Parameter, wie z. B. die Temperatur des Extrusionsmaterials, der Druck des Extrusionsmaterials, die Verweilzeit des Extrusionsmaterials in der Extrusionseinheit, etc., enthalten sind und bei der Zuordnung einer Drehzahl bzw. eines Drehzahlbereichs der Extruderschnecke zu einer erfassten Drehzahl bzw. eines erfassten Drehzahlbereichs des wenigstens einen Ausbringelements berücksichtigbar sind. Die Zuordnung einer erfassten Drehzahl bzw. eines erfassten Drehzahlbereichs des wenigstens einen Ausbringelements zu einer Drehzahl bzw. einem Drehzahlbereich der Extruderschnecke kann sonach im Allgemeinen weitere Parameter berücksichtigen bzw. gegebenenfalls sogar erfordern.

Bei dem wenigstens einen Koppelfaktor einer entsprechenden Koppelfunktion kann es sich um einen dynamischen oder um einen statischen Koppelfaktor handeln. Ein dynamischer Koppelfaktor kann ein sich aus der Kopplung ergebendes (ursprüngliches) Verhältnis der Drehzahl des wenigstens einen Ausbringelements und der Drehzahl der Extruderschnecke, insbesondere unter Berücksichtigung eines oder mehrerer anderer Betriebs- oder Prozessparameter der Fertigungseinrichtung und/oder eines wenigstens eine chemische und/oder physikalische Eigenschaft des vermittels der Fertigungseinrichtung verarbeiteten Extrusionsmaterials, anpassen bzw. verändern. Es ist also denkbar, dass sich das Verhältnis zwischen der Drehzahl des wenigstens einen Ausbringelements und der Drehzahl der Extruderschnecke bei einem Betrieb der Fertigungseinrichtung mit ersten Betriebs- oder Prozessparametern und/oder einem ersten verarbeiteten Extrusionsmaterial aufgrund einer dynamischen Anpassung durch den dynamischen Koppelfaktor von dem Verhältnis zwischen der Drehzahl des wenigstens einen Ausbringelements und der Drehzahl der Extruderschnecke bei einem Betrieb der Fertigungseinrichtung mit zweiten Betriebs- oder Prozessparametern und/oder einem zweiten verarbeiteten Extrusionsmaterial unterscheidet. Über einen dynamischen Koppelfaktor kann es sonach auch möglich sein, auf etwaige im Betrieb der Fertigungseinrichtung veränderliche Betriebs- oder Prozessparameter durch entsprechende Anpassung des Verhältnisses zwischen der Drehzahl des wenigstens einen Ausbringelements und der Drehzahl der Extruderschnecke zu reagieren.

Alternativ kann es sich bei dem wenigstens einen Koppelfaktor einer entsprechenden Koppelfunktion um einen statischen Koppelfaktor handeln. Im Gegensatz zu einem dynamischen Koppelfaktor ist das Verhältnis zwischen der Drehzahl des wenigstens einen Ausbringelements und der Drehzahl der Extruderschnecke bei einem statischen Koppelfaktor unabhängig von jeweiligen Betriebs- oder Prozessparametern der Fertigungseinrichtung unveränderlich. Gleichwohl können statische Koppelfaktoren für unterschiedliche Extrusionsmaterialien vorgesehen sein bzw. werden. Mithin kann ein erster statischer Koppelfaktor für ein erstes vermittels der Fertigungseinrichtung verarbeitetes Extrusionsmaterial und ein zweiter statischer Koppelfaktor für ein zweites vermittels der Fertigungseinrichtung verarbeitetes Extrusionsmaterial vorgesehen sein bzw. werden.

Aus den vorstehenden Erläuterungen ergibt sich erneut, dass, wie weiter oben bereits angedeutet, die wenigstens eine Koppelfunktion allgemein unter Berücksichtigung von einem oder mehreren Parametern des Extrusionsmaterials und/oder von einem oder mehreren Parametern, d. h. insbesondere entsprechenden Betriebs- oder Prozessparametern, des vermittels der Fertigungseinrichtung ausführbaren oder ausgeführten Fertigungsprozesses und/oder von einem oder mehreren Parametern der Fertigungseinrichtung erzeugt bzw. eingestellt werden kann.

Die wenigstens eine Koppelfunktion kann auf Grundlage von experimentellen Untersuchungen oder, wie erwähnt, computerimplementiert, insbesondere per computerimplementierter Simulation oder Modellierung z. B. eines vermittels der Fertigungseinrichtung durchführbaren Fertigungsprozesses und/oder eines aus einem vermittels der Fertigungseinrichtung durchführbaren oder durchgeführten Fertigungsprozess resultierenden dreidimensionalen Bauteils, ermittelt werden bzw. worden sein. Im Rahmen entsprechender Untersuchungen oder Simulationen bzw. Modellierungen können bestimmte, d. h. z. B. im Hinblick auf einen stabilen Betrieb der Fertigungseinrichtung geeignete, Verhältnisse zwischen der Drehzahl des wenigstens einen Ausbringelements und der Drehzahl der Extruderschnecke definiert werden, auf Grundlage welcher die wenigstens eine Koppelfunktion ermittelt wird.

Die Koppelfunktion kann sonach analog der Zuordnungsfunktion computerimplementiert erzeugt bzw. angepasst bzw. verändert werden, sodass die entsprechenden Ausführungen analog gelten.

Für alle Ausführungsformen gilt, dass die Steuer- und/oder Regeleinrichtung die Einstellung der Drehzahl der Extruderschnecke auf Grundlage der Drehzahl des wenigstens einen Ausbringelements automatisierbar oder automatisch ausführen kann. Mithin lässt sich mit dem Verfahren eine vollautomatisierbare bzw. eine vollautomatisierte Steuerung und/oder Regelung des Betriebs der Fertigungseinrichtung implementieren. Insbesondere können Steuer- und/oder Regelkreise implementiert werden, gemäß welchen die Steuer- und/oder Regeleinrichtung aktuelle oder künftige Drehzahlen des wenigstens einen Ausbringelements kontinuierlich, quasikontinuierlich oder diskontinuierlich ermittelt und auf Grundlage dieser kontinuierlich, quasikontinuierlich oder diskontinuierlich eine entsprechende Einstellung der Drehzahl der Extruderschnecke ausführt.

In einer Ausführungsform kann der wenigstens eine Koppelfaktor bzw. eine Koppelfunktion in einem bestimmten Betriebsmodus der Fertigungseinrichtung automatisierbar bzw. automatisch ermittelt werden. Ein entsprechender Betriebsmodus kann als Koppelfaktorermittlungsmodus bezeichnet bzw. erachtet werden. Ein entsprechender Betriebsmodus zur automatisierbaren bzw. automatischen Ermittlung des wenigstens einen Koppelfaktors bzw. einer Koppelfunkton kann gegebenenfalls einen eigenständigen Aspekt der Erfindung darstellen. In analoger Weise kann der Koppelfaktor bzw. eine Koppelfunktion während des normalen Betriebs der Fertigungseinrichtung, d. h. während der extrusionsbasierten additiven Fertigung eines dreidimensionalen Objekts, automatisierbar bzw. automatisch angepasst bzw. eingestellt werden, was ebenso einen eigenständigen Aspekt der Erfindung darstellen kann.

Im Rahmen eines entsprechenden Betriebsmodus können insbesondere folgende Schritte durchgeführt werden: (i) Ermittlung, ob eine aktuelle Drehzahl vordefinierte Systemgrenzen, wie z. B. vordefinierte Achsgrenzen, der Extrusionseinheit überschreitet, (ii) Ermittlung, einer eine Integration eines aktuellen Stellgrads eines Druckreglers oder eines Integrals zwischen einem Prozessparameter eines vermittels der Fertigungseinrichtung durchführbaren Fertigungsprozesses, (iii) Ermitteln, ob das Integral innerhalb vordefinierter Grenzen liegt, (iv) Definieren eines Koppelfaktors, wenn das Integral innerhalb der vordefinierten Grenzen liegt, (v) Anpassen bzw. Ändern der Drehzahl, wenn das Integral außerhalb der vordefinierten Grenzen liegt; (vi) gegebenenfalls ein- oder mehrfaches Wiederholen der vorgenannten Schritte (i) - (v).

Die Extruderschnecke kann im Rahmen des Betriebsmodus in unterschiedlichen Drehzahlabfolgen betrieben werden. Mithin kann die Extruderschnecke mit von einer Anfangsdrehzahl bis zu einer Enddrehzahl, insbesondere stufenweise, ansteigenden Drehzahlen betrieben werden. Sodann kann die Extruderschnecke mit von der Enddrehzahl bis zu der Anfangsdrehzahl, insbesondere stufenweise, absteigenden Drehzahlen betrieben werden. Die hierbei ermittelten Werte können derart plausibiliert und zur Bestimmung einer oder mehrerer Koppelfaktoren gemittelt werden.

Der Betriebsmodus kann programmtechnisch in der Steuer- und/oder Regeleinrichtung hinterlegt sein bzw. werden und somit über die Steuer- und/oder Regeleinrichtung implementiert werden.

Ein zweiter Aspekt der Erfindung betrifft eine Fertigungseinrichtung zur extrusionsbasierten additiven Fertigung eines dreidimensionalen Bauteils. Die Fertigungseinrichtung umfasst eine Extrusionseinheit zum Aufschmelzen eines Extrusionsmaterials mit einer um eine Drehachse drehbar antreibbaren Extruderschnecke, eine der Extrusionseinheit nachgeschaltet angeordnete Ausbringeinheit zum Ausbringen von aufgeschmolzenem Extrusionsmaterial auf einen Untergrund mit wenigstens einem um eine Drehachse drehbar antreibbaren Ausbringelement und eine hardware- und/oder softwaremäßig implementierte Steuer- und/oder Regeleinrichtung zur Steuerung oder Regelung des Betriebs der Fertigungseinrichtung aufweist. Die Steuer- und/oder Regeleinrichtung ist eingerichtet, die Drehzahl der Extruderschnecke auf Grundlage der Drehzahl des wenigstens einen Ausbringelements einzustellen. Sämtliche Ausführungen im Zusammenhang mit dem Verfahren gelten analog für die Fertigungseinrichtung und umgekehrt.

Ein dritter Aspekt der Erfindung betrifft eine hardware- und/oder softwaremäßig implementierte Steuer- und/oder Regeleinrichtung für eine Fertigungseinrichtung nach dem zweiten Aspekt der Erfindung. Die Steuer- und/oder Regeleinrichtung ist eingerichtet, die Drehzahl der Extruderschnecke auf Grundlage der Drehzahl des wenigstens einen Ausbringelements einzustellen. Sämtliche Ausführungen im Zusammenhang mit dem Verfahren gelten analog für die Steuer- und/oder Regeleinrichtung und umgekehrt.

Die Erfindung ist anhand von Ausführungsbeispielen in den Zeichnungen nochmals beispielhaft erläutert. Dabei zeigt:
Fig. 1 eine Prinzipdarstellung einer Fertigungseinrichtung zur extrusionsbasierten Fertigung eines dreidimensionalen Bauteils gemäß einem Ausführungsbeispiel;
Fig. 2 eine Prinzipdarstellung einer Steuer- und/oder Regeleinrichtung einer Fertigungseinrichtung zur extrusionsbasierten Fertigung eines dreidimensionalen Bauteils gemäß einem Ausführungsbeispiel;
Fig. 3 ein Blockdiagramm zur Veranschaulichung eines Verfahrens gemäß einem Ausführungsbeispiel; und
Fig. 4 ein Diagramm zur Veranschaulichung eines Koppelfaktors gemäß einem Ausführungsbeispiel.

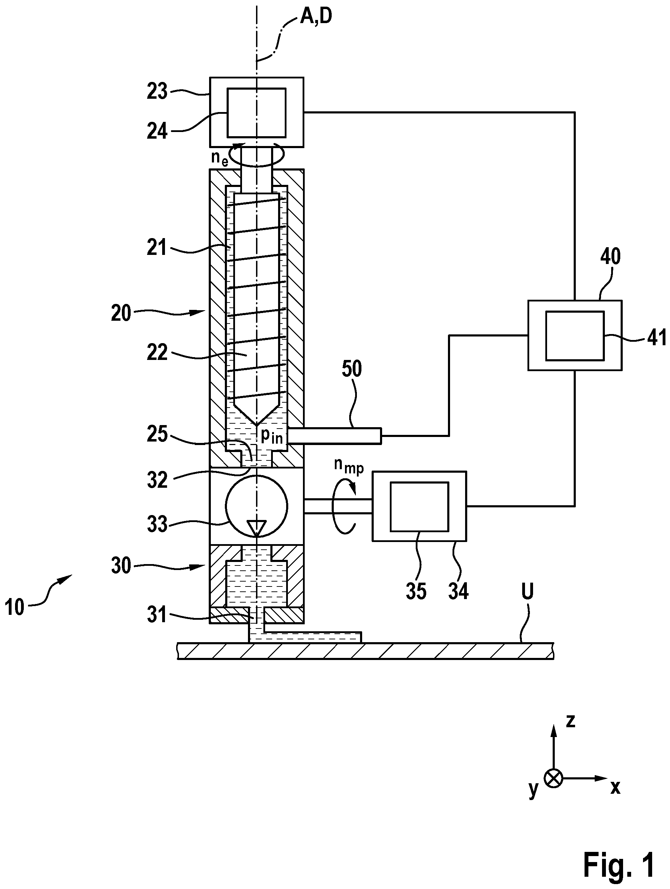

Fig. 1 zeigt eine Prinzipdarstellung einer Fertigungseinrichtung 10 zur extrusionsbasierten Fertigung eines dreidimensionalen Bauteils gemäß einem Ausführungsbeispiel. Der Betrieb der Fertigungseinrichtung 10 lässt sich über ein im Weiteren näher beschriebenes Verfahren steuern und/oder regeln.

Die Fertigungseinrichtung 10 ist zur extrusionsbasierten additiven Fertigung eines dreidimensionalen Bauteils, wie z. B. eines technischen Bauteils oder einer technischen Bauteilgruppe, eingerichtet, indem vermittels der Fertigungseinrichtung 10 extrusionsbasiert ein sukzessives Aufbringen eines aufgeschmolzenen Extrusionsmaterials, wie z. B. eines aufgeschmolzenen thermoplastischen Kunststoffmaterials, auf einen Untergrund U erfolgt. Konkret kann die Fertigungseinrichtung 10 eingerichtet sein, ein dreidimensionales Bauteil extrusionsbasiert durch sukzessives schichtweises Ausbilden von mehreren jeweils eine Querschnittsgeometrie des Bauteils abbildenden Schichten auf einen Untergrund U additiv bzw. generativ aufzubauen. Das Ausbilden der jeweils eine Querschnittsgeometrie des Bauteils abbildenden Schichten auf den Untergrund U erfolgt durch sukzessives Aufbringen von Materialbahnen bzw. -strängen aus dem aufgeschmolzenen Extrusionsmaterial auf den Untergrund U. Bei dem Untergrund U kann es sich um eine Bauplattform oder um eine bereits aufgebrachte Lage bzw. Schicht des Extrusionsmaterials handeln.

Die Fertigungseinrichtung 10 umfasst eine Extrusionseinheit 20, welche zum Aufschmelzen bzw. Plastifizieren eines Extrusionsmaterials eingerichtet ist. Die Extrusionseinheit 20 umfasst typischerweise eine, gegebenenfalls auch als Extruderzylinder zu bezeichnende bzw. zu erachtende, Extruderkammer 21 sowie wenigstens eine in der Extruderkammer 21 angeordnete, eine Extruderachse A definierende Extruderschnecke 22. Die Extruderkammer 21 umfasst typischerweise eine oder mehrere die Extruderkammer 21 begrenzende bzw. definierende Extruderkammerwandungen (nicht näher bezeichnet). Die Extruderkammer 21 kann unterschiedlich funktionalisierte Bereiche bzw. Zonen, wie z. B. einen, z. B. trichterartigen bzw. - förmigen, Befüllbereich (nicht bezeichnet), über welchen ein Befüllen der Extruderkammer 21 mit aufzuschmelzendem Extrusionsmaterial erfolgt, einen Aufschmelzbereich, in welchem das Aufschmelzen des in die Extruderkammer 21 gefüllten aufzuschmelzenden Extrusionsmaterials erfolgt, sowie einen Ausströmbereich, über welchen aufgeschmolzenes Extrusionsmaterial aus der Extruderkammer 21 ausströmen kann, aufweisen. Die Extruderschnecke 22 ist um die in dem Ausführungsbeispiel mit der Extruderachse A zusammenfallende Drehachse D drehbar antreibbar bzw. gelagert. Zum Antrieb der Extruderschnecke 22, d. h. zum Überführen der Extruderschnecke 22 in eine Drehbewegung um die Drehachse D, ist der Extruderschnecke 22 eine Antriebseinheit 23 zugeordnet. Die Antriebseinheit 23 ist insbesondere eingerichtet, die Extruderschnecke 22 mit einer bestimmten Drehzahl bzw. in einem bestimmten Drehzahlbereich in eine Drehbewegung um die Drehachse D zu versetzen. Die Antriebseinheit 23 kann ein hardware- und/oder softwaremäßig implementiertes Steuergerät 24 umfassen. Die Antriebseinheit 23 kann z. B. als Motor, insbesondere als Elektromotor, ausgebildet sein oder wenigstens einen solchen umfassen.

Die Extrusionseinheit 20 kann in wenigstens einem Bewegungsfreiheitsgrad relativ zu dem Untergrund U bewegbar gelagert sein. Zur Realisierung von Bewegungen der Extrusionseinheit 20 kann die Fertigungseinrichtung 10 eine in der Fig. nicht gezeigte Antriebseinrichtung und/oder eine Führungseinrichtung umfassen. Eine entsprechende Antriebseinrichtung kann als Antriebsmotor implementiert und zur Erzeugung von die Extrusionseinheit 20 in eine Bewegung entlang wenigstens einer translatorischen und/oder rotatorischen Bewegungsbahn versetzenden Antriebskraft eingerichtet sein. Eine entsprechende Antriebs- bzw. Führungseinrichtung kann als Führungsschienenanordnung implementiert sein und zur Bestimmung entsprechender Bewegungsbahnen eingerichtet sein. Einer entsprechenden Antriebs- und/oder Führungseinrichtung kann eine Steuereinrichtung zugeordnet sein, welche zur Erzeugung von den Betrieb der Antriebs- bzw. Führungseinrichtung steuernden Daten eingerichtet ist, über welche sich ein- oder mehrdimensionale Bewegungsbahnen der Extrusionseinheit 20 realisieren lassen. Konkret kann eine entsprechende Antriebs- bzw. Führungseinrichtung z. B. als ein- oder mehrachsige Gantryanordnung ausgeführt sein oder eine solche umfassen, an welcher die Extrusionseinheit 20 in ein oder mehreren Bewegungsfreiheitsgraden bewegbar gelagert angeordnet oder ausgebildet ist. Alternativ kann eine entsprechende Antriebs- bzw. Führungseinrichtung z. B. als ein- oder mehrachsige Roboteranordnung ausgeführt sein oder eine solche umfassen, an welcher die Extrusionseinheit 20 in ein oder mehreren Bewegungsfreiheitsgraden bewegbar gelagert angeordnet oder ausgebildet ist.

Alternativ kann die Extrusionseinheit 20 ortsfest gelagert und ein Untergrund, wie z. B. ein eine Bauebene definierender Arbeitstisch der Fertigungseinrichtung 10, bewegbar relativ zu der Extrusionseinheit 20 bewegbar gelagert sein. Zur Realisierung von Bewegungen des Untergrunds, d. h. insbesondere eines entsprechenden Arbeitstischs, 20 kann die Fertigungseinrichtung 10 eine in der Fig. nicht gezeigte Antriebseinrichtung und/oder eine Führungseinrichtung umfassen. Es gelten die vorstehenden Erläuterungen zur beweglichen Lagerung der Extrusionseinheit 20 analog.

Die Fertigungseinrichtung 10 weist weiterhin eine der Extrusionseinheit 20 nachgeschaltet angeordnete oder ausgebildete Ausbringeinheit 30 auf, welche zum Austragen bzw. Aufbringen eines vermittels der Extrusionseinheit 20 aufgeschmolzenen Extrusionsmaterials auf den Untergrund U eingerichtet ist. Die Ausbringeinheit 30 ist sonach eingerichtet, ein aufgeschmolzenes Extrusionsmaterial, insbesondere bahnförmig bzw. -strangförmig, kontinuierlich oder quasi-kontinuierlich, d. h. z. B. in einer kontinuierlichen oder quasi-kontinuierlichen Material- bzw. Schmelzebahn bzw. in einem kontinuierlichen oder quasi-kontinuierlichen Material- bzw. Schmelzestrang, auf den Untergrund U auszutragen bzw. aufzubringen. Die Ausbringeinheit 30 kann sonach wenigstens einen Ausgang, insbesondere in Form einer düsenartigen bzw. -förmigen Ausströmöffnung 31 aufweisen, über welche(n) aufgeschmolzenes Extrusionsmaterial auf den Untergrund U austragbar bzw. aufbringbar ist. Die Ausströmöffnung 31 kann gegebenenfalls in ihrer Querschnittsgeometrie variierbar sein.

Die Ausbringeinheit 30 kann eine zu der Extrusionseinheit 20 gesonderte Bau- bzw. Funktionseinheit der Fertigungseinrichtung 10 darstellen. Die Ausbringeinheit 30 und die Extrusionseinheit 20 sind gleichwohl strömungstechnisch miteinander koppelbar bzw. gekoppelt, insbesondere derart, dass vermittels der Extrusionseinheit 20 aufgeschmolzenes Extrusionsmaterial von einem Ausgang 25 der Extrusionseinheit 20 in einen Eingang 32 der Ausbringeinheit 30 strömen kann, um über einen Ausgang der Ausbringeinheit 30, d. h. in dem Ausführungsbeispiel die Ausströmöffnung 31, auf den Untergrund U ausgetragen bzw. aufgebracht werden zu können. Die Extrusionseinheit 20, d. h. insbesondere die Extruderkammer 21, umfasst sonach wenigstens einen Ausgang 25, z. B. in Form einer düsenartigen bzw. - förmigen Ausströmöffnung, über welche(n) aufgeschmolzenes Extrusionsmaterial aus der Extrusionseinheit 20 in Richtung des Eingangs 32 der Ausbringeinheit 30, z. B. in Form einer Einströmöffnung, ausströmen kann. Die Ausbringeinheit 30 umfasst entsprechend wenigstens einen Eingang 32, z. B. in Form einer düsenartigen bzw. - förmigen Einströmöffnung, über welche(n) aufgeschmolzenes Extrusionsmaterial aus der Extrusionseinheit 20 in die Ausbringeinheit 30 einströmen kann. Wie erwähnt, weist die Ausbringeinheit 30 zudem wenigstens einen Ausgang auf, über welche(n) aufgeschmolzenes Extrusionsmaterial auf den Untergrund U austragbar bzw. aufbringbar ist.

Die Ausbringeinheit 30 umfasst ein um eine Drehachse - diese kann z. B. lotrecht zu der Drehachse D ausgerichtet sein - drehbar antreibbares bzw. gelagertes Ausbringelement 33. Zum Antrieb des Ausbringelements 33, d. h. zum Überführen des Ausbringelements 33 in eine Drehbewegung um die Drehachse, ist dem Ausbringelement 33 eine Antriebseinheit 34 zugeordnet. Die Antriebseinheit 34 ist eingerichtet, dass Ausbringelement 33 mit einer bestimmten Drehzahl bzw. in einem bestimmten Drehzahlbereich in eine Drehbewegung um die Drehachse zu versetzen. Die Antriebseinheit 34 kann ein hardware- und/oder softwaremäßig implementiertes Steuergerät 35 umfassen. Die Antriebseinheit 34 kann z. B. als Motor, insbesondere als Elektromotor, ausgebildet sein oder wenigstens einen solchen umfassen.

Die Ausbringeinheit 30 kann als eine in wenigstens einem Förderparameter, insbesondere der Fördergeschwindigkeit bzw. -menge, variierbare Fördereinheit ausgebildet sein oder eine solche umfassen. Mithin ist es möglich, die Austragsgeschwindigkeit oder -menge des Extrusionsmaterials vermittels der Ausbringeinheit, insbesondere unabhängig von der Extrusionseinheit 20, gezielt zu beeinflussen. Eine entsprechende Fördereinheit kann konkret z. B. als eine Pumpeneinheit, insbesondere als eine Zahnradpumpeneinheit, ausgebildet sein oder eine solche umfassen. Bei dem Ausbringelement 33 kann es sich konkret sonach um wenigstens ein drehbar antreibbares Bauelement, wie z. B. um ein Zahnradelement, einer entsprechenden Förder- bzw. Pumpeneinheit handeln.

Über eine entsprechende Förder- bzw. Pumpeneinheit kann sich eine Zwangsförderung des Extrusionsmaterials aus der Extrusionseinheit 20 realisieren lassen; eine entsprechende Förder- bzw. Pumpeneinheit kann sonach eingerichtet sein, eine Zwangsförderung von aufgeschmolzenem Extrusionsmaterial aus der Extrusionseinheit 20 zu realisieren.

Die Fertigungseinrichtung 10 umfasst weiterhin eine hardware- und/oder softwaremäßig implementiert Steuer- und/oder Regeleinrichtung 40, welche zur Steuerung und/oder Regelung des Betriebs der Fertigungseinrichtung 10 eingerichtet ist. Die Steuer- und/oder Regeleinrichtung 40 kann insbesondere eingerichtet sein, der Steuerung und/oder Regelung des Betriebs der Fertigungseinrichtung 10 eine oder mehrere Eingangsgrößen zugrunde zu legen und aus diesen computerimplementiert bzw. datenverarbeitungsmäßig Steuer- und/oder Regelgrößen für die Steuerung und/oder Regelung des Betriebs der Fertigungseinrichtung 10 zu erzeugen. Die Steuer- und/oder Regeleinrichtung 40 kann sonach, insbesondere über eine oder mehrere Daten- bzw. Kommunikationsschnittstellen (nicht gezeigt), mit einer oder mehreren Einheiten der Fertigungseinrichtung 10 kommunizieren, welche entsprechende Eingangsgrößen bereitstellen, aus welchen die Steuer- und/oder Regeleinrichtung 40 computerimplementiert bzw. datenverarbeitungsmäßig Steuer- und/oder Regelgrößen für die Steuerung und/oder Regelung des Betriebs der Fertigungseinrichtung 10 erzeugt. Konkret kann die Steuer- und/oder Regeleinrichtung 40 mit der Extrusionseinheit 20, d. h. insbesondere dem Steuergerät 24 der Antriebseinheit 23 der Extrusionseinheit 20, und mit der Ausbringeinheit 30, d. h. insbesondere dem Steuergerät 35 der Antriebseinheit 34 der Ausbringeinheit 30, kommunizieren, welche sonach entsprechende Eingangsgrößen bereitstellen können, aus welchen die Steuer- und/oder Regeleinrichtung 40 computerimplementiert bzw. datenverarbeitungsmäßig Steuer- und/oder Regelgrößen für die Steuerung und/oder Regelung des Betriebs der Fertigungseinrichtung 10 erzeugt.

Vermittels der Steuer- und/oder Regeleinrichtung 40 lässt sich ein Verfahren zur Steuerung und/oder Regelung des Betriebs der Fertigungseinrichtung 10 implementieren. Das Verfahren zeichnet sich dadurch aus, dass die Drehzahl der Extruderschnecke 22 auf Grundlage der Drehzahl des um die Drehachse drehbaren Ausbringelements 33 eingestellt wird. Verfahrensgemäß ist es sonach vorgesehen, die Drehzahl der Extruderschnecke 22 auf Grundlage der Drehzahl des Ausbringelements einzustellen. Die Einstellung beinhaltet insbesondere ein Steuern und/oder Regeln der Drehzahl der Extruderschnecke 22 auf Grundlage der Drehzahl des Ausbringelements 33. Verfahrensgemäß erfolgt sonach ein Steuern und/oder Regeln der Drehzahl der Extruderschnecke 22 auf Grundlage der Drehzahl des Ausbringelements 33. Das Verfahren sieht sonach eine Kopplung, d. h. insbesondere eine direkte Kopplung, der Drehzahl der Extruderschnecke 22 mit der Drehzahl des Ausbringelements 33 vor. Die Kopplung ist insbesondere vordefiniert, sodass einer bestimmten Drehzahl oder einem bestimmten Drehzahlbereich des Ausbringelements 33, diese(r) kann einer Drehzahl bzw. einem Drehzahlbereich der dem Ausbringelement 33 zugeordneten Antriebseinheit 34 entsprechen, eine vordefinierte Drehzahl bzw. ein vordefinierter Drehzahlbereich der Extruderschnecke 22, diese(r) kann einer Drehzahl bzw. einem Drehzahlbereich der der Extruderschnecke 22 zugeordneten Antriebseinheit 23 entsprechen, zugeordnet ist bzw. wird. Mithin kann eine bestimmte Drehzahl oder ein bestimmter Drehzahlbereich des Ausbringelements 33 verfahrensgemäß vordefiniert mit einer bestimmten Drehzahl oder einem Drehzahlbereich der Extruderschnecke 22 verknüpft bzw. korreliert sein.

Verfahrensgemäß kann daher einer im Betrieb der Fertigungseinrichtung 10 gegebenen Drehzahl oder einem Drehzahlbereich des Ausbringelements 33, diese(r) kann, wie erwähnt, einer Drehzahl bzw. einem Drehzahlbereich der dem Ausbringelement 33 zugeordneten Antriebseinheit 34 entsprechen, eine bestimmte Drehzahl bzw. einem bestimmten Drehzahlbereich der Extruderschnecke 22, diese(r) kann, wie ebenso erwähnt, einer Drehzahl bzw. einem Drehzahlbereich der der Extruderschnecke 22 zugeordneten Antriebseinheit 23 entsprechen, zugeordnet und der Betrieb der Fertigungseinrichtung 10 auf Grundlage dieser Zuordnung gesteuert bzw. geregelt werden. Die beschriebene Kopplung kann die Realisierung eines definierten Verhältnisses der Drehzahl des Ausbringelements 33 und der Drehzahl der Extruderschnecke 22 ermöglichen. Das Verhältnis kann im Hinblick auf eine bestimmte Zielgröße, d. h. insbesondere eine bestimmte Steuer- und/oder Regelgröße, respektive deren Erreichung bzw. Aufrechterhaltung gewählt sein. Die verfahrensgemäße Steuerung und/oder Regelung des Betriebs der Fertigungseinrichtung 10 kann sonach im Allgemeinen im Hinblick auf eine Zielgröße respektive deren Erreichung bzw. Aufrechterhaltung durchgeführt werden.

Die beschriebene Kopplung der Drehzahl des Ausbringelements 33 mit der Drehzahl der Extruderschnecke 22 ermöglicht nicht nur eine weniger träge und damit deutlich dynamische Steuerung und/oder Regelung des Betriebs der Fertigungseinrichtung 10, sondern auch eine genauere Steuerung und/oder Regelung des Betriebs der Fertigungseinrichtung 10, da im Betrieb der Fertigungseinrichtung 10 etwaig entstehende Drehzahländerungen bzw. -schwankungen des Ausbringelements 33, welche z. B. auf Druckänderungen bzw. -schwankungen der Extruderschnecke 22 zurückzuführen sein können, unmittelbar zur Anpassung der Drehzahl der Extruderschnecke 22 verwendet werden können.

Die, insbesondere durch entsprechende Programmierung, zur Durchführung des Verfahrens eingerichtete Steuer- und/oder Regeleinrichtung 40 ist sonach im Allgemeinen eingerichtet, den Betrieb der Extruderschnecke 22 auf Grundlage der Drehzahl des Ausbringelements 33 einzustellen, d. h. insbesondere zu steuern oder zu regeln. Insbesondere ist die Steuer- und/oder Regeleinrichtung 40 eingerichtet, die Drehzahl der Extruderschnecke 22 auf Grundlage der Drehzahl des Ausbringelements 33 in der beschriebenen Weise einzustellen, d. h. insbesondere zu steuern und/oder zu regeln. Die Steuer- und/oder Regeleinrichtung 40 kann hierfür, wie erläutert, mit der dem Ausbringelement 33 zugeordneten Antriebseinheit 34 und der der Extruderschnecke 22 zugeordneten Antriebseinheit 23 kommunizieren, insbesondere derart, dass sie eine Drehzahl bzw. einen Drehzahlbereich des Ausbringelements 33 als Eingangsgröße erhält und diesen basierend auf einer vordefinierten Kopplung der Drehzahl bzw. des Drehzahlbereichs des Ausbringelements 33 mit einer Drehzahl bzw. einem Drehzahlbereich der Extruderschnecke 22 in eine Drehzahl bzw. einen Drehzahlbereich der Extruderschnecke 22 als Ausgangsgröße umwandelt.

Alternativ oder ergänzend kann eine die Drehzahl bzw. einen Drehzahlbereich des Ausbringelements 33, insbesondere indirekt, beschreibende Eingangsgröße, wie z. B. ein Drehmoment der Antriebseinheit 34 der Ausbringeinheit 30, eine Leistungsaufnahme der Antriebseinheit 34 der Ausbringeinheit 30, ein Energieverbrauch, insbesondere ein Stromverbrauch, der Antriebseinheit 34 der Ausbringeinheit 30, etc. verwendet werden. Analoges gilt für die Ausgangsgröße; mithin kann die Ausgangsgröße z. B. ein Drehmoment der Antriebseinheit 23 der Extrusionseinheit 20, eine Leistungsaufnahme der Antriebseinheit 23 der Extrusionseinheit 20, ein Energieverbrauch, insbesondere ein Stromverbrauch, Antriebseinheit 23 der Extrusionseinheit 20, etc. sein.

Es wurde erwähnt, dass die verfahrensgemäße Steuerung und/oder Regelung des Betriebs der Fertigungseinrichtung 10 im Allgemeinen im Hinblick auf eine Zielgröße respektive deren Erreichung bzw. Aufrechterhaltung durchgeführt werden kann. In einer Ausführungsform kann die Steuer- und/oder Regeleinrichtung 40 die Einstellung der Drehzahl der Extruderschnecke 22 auf Grundlage der Drehzahl des Ausbringelements sonach unter Berücksichtigung einer Zielgröße bzw. eines Zielkriteriums vornehmen. Die Zielgröße bzw. das Zielkriterium kann z. B. ein bestimmtes Druckniveau des Extrusionsmaterials an dem Eingang der Ausbringeinheit 30 und/oder in einem Bereich zwischen dem Eingang der Ausbringeinheit 30 und dem der Ausbringeinheit 30 zugewandten Ausgang der Extrusionseinheit 20 und/oder an dem der Ausbringeinheit 30 zugewandten Ausgang der Extrusionseinheit 20 betreffen. Die verfahrensgemäß erfolgende Einstellung der Drehzahl der Extruderschnecke 22 auf Grundlage der Drehzahl des Ausbringelements 33 kann sonach im Hinblick auf ein bestimmtes Druckniveau des Extrusionsmaterials an dem Eingang der Ausbringeinheit 30 und/oder in einem Bereich zwischen dem Eingang der Ausbringeinheit 30 und dem der Ausbringeinheit 30 zugewandten Ausgang der Extrusionseinheit 20 und/oder an einem der Ausbringeinheit 30 zugewandten Ausgang der Extrusionseinheit 20 erfolgen. Bei dem bestimmten Druckniveau kann es sich insbesondere um ein (zeitlich) konstantes Druckniveau handeln. Ein (zeitlich) konstantes Druckniveau kann, etwa im Hinblick auf die Gewährleistung eines (weitgehend) homogenen Material- bzw. Schmelzestrangs, einen besonders stabilen Betrieb der Fertigungseinrichtung 10 ermöglichen.

In einer Ausführungsform des Verfahrens kann die Steuer- und/oder Regeleinrichtung 40 eine den aktuellen und/oder künftigen Druck innerhalb der Extrusionseinheit 20 und/oder Ausbringeinheit 30 beschreibende Druckinformation berücksichtigen und der Steuerung und/oder Regelung des Betriebs der Fertigungseinrichtung 10 als zusätzlichen Eingangsparameter zugrunde legen. Alternativ oder ergänzend kann die Steuer- und/oder Regeleinrichtung 40 eine die aktuelle und/oder künftige Temperatur innerhalb der Extrusionseinheit 20 und/oder Ausbringeinheit 30 beschreibende Temperaturinformation berücksichtigen und der Steuerung und/oder Regelung des Betriebs der Fertigungseinrichtung 10 als zusätzlichen Eingangsparameter zugrunde legen. Alternativ oder ergänzend kann die Steuer- und/oder Regeleinrichtung 40 eine einen aktuellen und/oder künftigen Materialparameter, wie z. B. das Fließverhalten, die Viskosität, etc., innerhalb der Extrusionseinheit 20 und/oder Ausbringeinheit 30 beschreibende Materialparameterinformation berücksichtigen und der Steuerung und/oder Regelung des Betriebs der Fertigungseinrichtung 10 als zusätzlichen Eingangsparameter zugrunde legen. Die Druckinformation und/oder die Temperaturinformation und/oder die Materialparameterinformation können durch entsprechende Erfassungseinrichtungen 50, wie z. B. Sensoriken, erfasst oder aus von diesen erzeugten Signalen ermittelt werden. Die Fertigungseinrichtung 10 kann sonach wenigstens eine Erfassungseinrichtung 50 zur Erfassung einer entsprechenden Druckinformation und/oder einer entsprechenden Temperaturinformation und/oder einer entsprechenden Materialparameterinformation umfassen. In dem in Fig. 1 gezeigten Ausführungsbeispiel ist rein exemplarisch eine Erfassungseinrichtung 50 in Form eines Massedrucksensors zur Erfassung des Massedrucks innerhalb der Extrusionseinheit 20 dargestellt. Alternativ oder ergänzend könnte ein Durchflusssensor, wie z. B. ein Masse- oder Volumenstromsensor, als Erfassungseinrichtung 50 verwendet werden.

In einer Ausführungsform des Verfahrens kann die Steuer- und/oder Regeleinrichtung 40 die Drehzahl der Extruderschnecke 22 auf Grundlage der Drehzahl des Ausbringelements 33 einstellen, indem eine vermittels einer Erfassungseinrichtung, wie z. B. eines Drehzahlsensors, erfasste Drehzahl des Ausbringelements 33 einer dieser erfassten Drehzahl gemäß wenigstens einer Zuordnungsfunktion zugeordneten Drehzahl der Extruderschnecke 22 zugeordnet wird. Die Steuer- und/oder Regeleinrichtung 40 kann im Rahmen der Durchführung des Verfahrens sonach wenigstens eine Zuordnungsfunktion verwenden, gemäß welcher bestimmte Drehzahlen bzw. Drehzahlbereiche des Ausbringelements 33 mit bestimmten Drehzahlen bzw. Drehzahlbereichen der Extruderschnecke 22 korreliert sind, sodass jeder erfassten Drehzahl bzw. jedem erfassten Drehzahlbereich des Ausbringelements 33 eine bestimmte Drehzahl bzw. ein bestimmter Drehzahlbereich der Extruderschnecke 22 zugeordnet ist, welcher im Rahmen der Steuerung und/oder Regelung des Betriebs der Fertigungseinrichtung 10 angewendet wird. Wie erläutert, kann derart eine Einstellung der Drehzahl der Extruderschnecke 22 auf Grundlage der Drehzahl des Ausbringelements 33 erfolgen. Die Zuordnungsfunktion kann sonach eine vordefinierte Zuordnung von Drehzahlen bzw. Drehzahlbereichen der Extruderschnecke 22 zu Drehzahlen bzw. Drehzahlbereichen des Ausbringelements 33, und umgekehrt, beinhalten. Die Zuordnungsfunktion kann, z. B. in Form eines eine entsprechende Zuordnung beschreibenden Datensatzes, in einer der Steuer- und/oder Regeleinrichtung 40 zugeordneten oder zugehörigen Datenspeichereinrichtung 41 gespeichert sein bzw. werden.

Die Zuordnungsfunktion kann computerimplementiert, d. h. insbesondere auf Grundlage eines computerimplementiert erstellten Modells, wie z. B. eines vermittels eines oder mehreren Algorithmen oder Modellen der künstlichen Intelligenz bzw. des maschinellen Lernens (machine learning), erzeugt werden. Entsprechende Algorithmen oder Modelle können sonach ein oder mehrere, ein- oder mehrschichtige künstliche neuronale Netze beinhalten. Entsprechende künstliche neuronale Netze können als Eingangsgrößen Drehzahlen bzw. Drehzahlbereiche des wenigstens einen Ausbringelements erhalten und aus diesen Drehzahlen bzw. Drehzahlbereiche der wenigstens einen Extruderschnecke ermitteln.

Die Zuordnungsvorschrift kann nicht nur computerimplementiert erzeugt, sondern gegebenenfalls auch computerimplementiert angepasst bzw. verändert werden. Mithin kann eine Zuordnungsvorschrift z. B. vermittels Algorithmen oder Modellen der künstlichen Intelligenz bzw. des maschinellen Lernens, insbesondere im Betrieb der Fertigungseinrichtung, automatisierbar oder automatisch angepasst werden. Derart kann z. B. auf veränderliche Prozess- oder Materialparameter reagiert werden, welche sonach zu einer automatisierbaren oder automatischen Anpassung eines einer Zuordnungsvorschrift zugrunde liegenden Modells führen können.

Die Steuer- und/oder Regeleinrichtung 40 kann sonach eine Datenspeichereinrichtung 41 umfassen oder mit einer solche verbunden sein, in welcher bestimmte Drehzahlen oder Drehzahlbereiche des Ausbringelements 33 mit bestimmten Drehzahlen oder Drehzahlbereichen der Extruderschnecke 22, insbesondere über wenigstens eine Zuordnungs- bzw. Koppelfunktion, verknüpft bzw. korreliert sind.

Die Zuordnungsfunktion kann sonach wenigstens eine Koppelfunktion sein oder eine solche umfassen, über welche eine erfasste Drehzahl bzw. ein erfasster Drehzahlbereich des Ausbringelements 33 einer Drehzahl bzw. einem Drehzahlbereich der Extruderschnecke 22 zugeordnet ist. Die Koppelfunktion kann sonach eine Kopplung einer erfassten Drehzahl bzw. eines erfassten Drehzahlbereichs des Ausbringelements 33 mit einer bestimmten Drehzahl bzw. einem bestimmten Drehzahlbereich der Extruderschnecke 22 beschreiben bzw. definieren; eine erfasste Drehzahl bzw. ein erfasster Drehzahlbereich des Ausbringelements 33 kann so mit einer Drehzahl bzw. einem Drehzahlbereich der Extruderschnecke 22 gekoppelt sein bzw. werden. Eine entsprechende Koppelfunktion kann ein oder mehrere, insbesondere statische oder dynamische, Koppelfaktoren beinhalten, über welche eine erfasste Drehzahl bzw. ein erfasster Drehzahlbereich des wenigstens einen Ausbringelements einer Drehzahl bzw. einem Drehzahlbereich der Extruderschnecke zugeordnet wird.

Der Begriff Koppelfunktion beinhaltet sonach nicht nur einen Faktor, wie z. B. einen numerischen Wert, über welchen sich eine erfasste Drehzahl bzw. ein erfasster Drehzahlbereich des Ausbringelements 23 durch eine Umrechnung bzw. eine mathematische Operation, wie z. B. durch eine Multiplikation, einer Drehzahl bzw. einem Drehzahlbereich der Extruderschnecke 22 zuordnen bzw. in eine solche umrechnen lässt, sondern kann auch ein- oder mehrdimensionale Zuordnungskennfelder bzw. Zuordnungsarrays oder Zuordnungstabellen beinhalten, in welchen neben erfassten Drehzahlen bzw. Drehzahlbereichen des Ausbringelements 23 und diesen zugeordneten Drehzahlen bzw. Drehzahlbereichen der Extruderschnecke 22 weitere Parameter, d. h. insbesondere anlagen-, material- oder prozessspezifische Parameter, wie z. B. die Temperatur des Extrusionsmaterials, der Druck des Extrusionsmaterials, die Verweilzeit des Extrusionsmaterials in der Extrusionseinheit 20, etc., enthalten sind und bei der Zuordnung einer Drehzahl bzw. eines Drehzahlbereichs der Extruderschnecke 23 zu einer erfassten Drehzahl bzw. eines erfassten Drehzahlbereichs des Ausbringelements 23 berücksichtigbar sind. Die Zuordnung einer erfassten Drehzahl bzw. eines erfassten Drehzahlbereichs des Ausbringelements 23 zu einer Drehzahl bzw. einem Drehzahlbereich der Extruderschnecke 22 kann sonach im Allgemeinen weitere Parameter berücksichtigen bzw. gegebenenfalls sogar erfordern.

Die Koppelfunktion kann analog der Zuordnungsfunktion computerimplementiert erzeugt bzw. angepasst bzw. verändert werden.

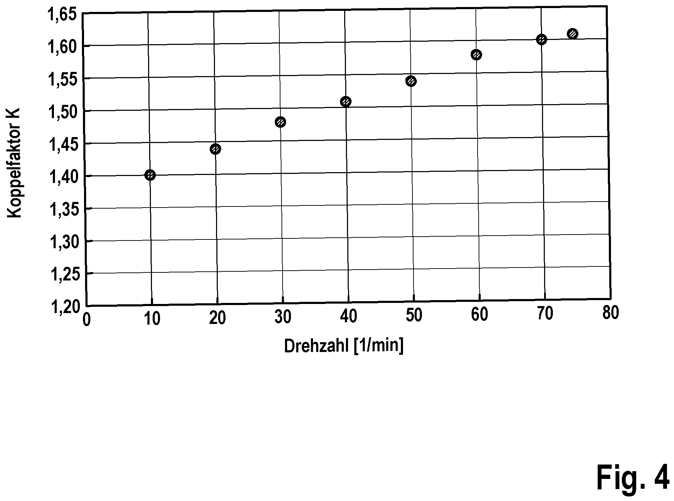

Fig. 4 zeigt beispielhaft ein Diagramm, in welchen für ein bestimmtes Extrusionsmaterial und bestimmte Prozessparameter ein Koppelfaktor K (y-Achse) für bestimmte Drehzahlen des Ausbringelements 33 (x-Achse) dargestellt ist, sodass für diverse Drehzahlen des Ausbringelements 33 ein Koppelfaktor K definiert ist, über welchen sich eine jeweils zugehörige Drehzahl der Exruderschnecke 22 ermitteln lässt.

Bei dem Koppelfaktor K einer entsprechenden Koppelfunktion kann es sich grundsätzlich um einen dynamischen oder um einen statischen Koppelfaktor handeln. Ein dynamischer Koppelfaktor kann ein sich aus der Kopplung ergebendes (ursprüngliches) Verhältnis der Drehzahl des Ausbringelements 33 und der Drehzahl der Extruderschnecke 22, insbesondere unter Berücksichtigung eines oder mehrerer anderer Betriebs- oder Prozessparameter der Fertigungseinrichtung 10 und/oder eines wenigstens eine chemische und/oder physikalische Eigenschaft des vermittels der Fertigungseinrichtung 10 verarbeiteten Extrusionsmaterials, anpassen bzw. verändern. Es ist also denkbar, dass sich das Verhältnis zwischen der Drehzahl des Ausbringelements 33 und der Drehzahl der Extruderschnecke 22 bei einem Betrieb der Fertigungseinrichtung 10 mit ersten Betriebs- oder Prozessparametern und/oder einem ersten verarbeiteten Extrusionsmaterial aufgrund einer dynamischen Anpassung durch den dynamischen Koppelfaktor von dem Verhältnis zwischen der Drehzahl des Ausbringelements 33 und der Drehzahl der Extruderschnecke 22 bei einem Betrieb der Fertigungseinrichtung 10 mit zweiten Betriebs- oder Prozessparametern und/oder einem zweiten verarbeiteten Extrusionsmaterial unterscheidet. Dies ist, wie vorstehend erwähnt, in Fig. 4 jedenfalls für unterschiedliche Drehzahlen des Ausbringelements 33 ersichtlich. Über einen dynamischen Koppelfaktor kann es sonach auch möglich sein, auf etwaige im Betrieb der Fertigungseinrichtung 10 veränderliche Betriebs- oder Prozessparameter durch entsprechende Anpassung des Verhältnisses zwischen der Drehzahl des Ausbringelements 33 und der Drehzahl der Extruderschnecke 22 zu reagieren.

Alternativ kann es sich bei dem Koppelfaktor K einer entsprechenden Koppelfunktion um einen statischen Koppelfaktor handeln. Im Gegensatz zu einem dynamischen Koppelfaktor ist das Verhältnis zwischen der Drehzahl des Ausbringelements 33 und der Drehzahl der Extruderschnecke 22 bei einem statischen Koppelfaktor unabhängig von jeweiligen Betriebs- oder Prozessparametern der Fertigungseinrichtung 10 unveränderlich. Gleichwohl können statische Koppelfaktoren für unterschiedliche Extrusionsmaterialien vorgesehen sein bzw. werden. Mithin kann ein erster statischer Koppelfaktor für ein erstes vermittels der Fertigungseinrichtung 10 verarbeitetes Extrusionsmaterial und ein zweiter statischer Koppelfaktor für ein zweites vermittels der Fertigungseinrichtung 10 verarbeitetes Extrusionsmaterial vorgesehen sein bzw. werden.

Aus den vorstehenden Erläuterungen ergibt sich, dass der Koppelfaktor K bzw. eine Koppelfunktion allgemein unter Berücksichtigung von einem oder mehreren Parametern des Extrusionsmaterials und/oder von einem oder mehreren Parametern, d. h. insbesondere entsprechenden Betriebs- oder Prozessparametern, des vermittels der Fertigungseinrichtung 10 ausführbaren oder ausgeführten Fertigungsprozesses und/oder von einem oder mehreren Parametern der Fertigungseinrichtung 10 erzeugt oder eingestellt werden kann.

Der Koppelfaktor K bzw. eine Koppelfunktion kann auf Grundlage von experimentellen Untersuchungen oder, wie angedeutet, computerimplementiert, insbesondere per computerimplementierter Simulation oder Modellierung eines vermittels der Fertigungseinrichtung 10 durchführbaren Fertigungsprozesses und/oder eines aus einem vermittels der Fertigungseinrichtung 10 durchführbaren oder durchgeführten Fertigungsprozess resultierenden dreidimensionalen Bauteils, ermittelt werden bzw. worden sein. Im Rahmen entsprechender Untersuchungen oder Simulationen bzw. Modellierungen können bestimmte, d. h. z. B. im Hinblick auf einen stabilen Betrieb der Fertigungseinrichtung geeignete, Verhältnisse zwischen der Drehzahl des Ausbringelements 33 und der Drehzahl der Extruderschnecke 22 definiert werden, auf Grundlage welcher der Koppelfaktor K ermittelt wird.

Die Steuer- und/oder Regeleinrichtung 40 kann die Einstellung der Drehzahl der Extruderschnecke 22 auf Grundlage der Drehzahl des Ausbringelements 33 im Allgemeinen automatisierbar oder automatisch ausführen. Mithin lässt sich mit dem Verfahren eine vollautomatisierbare bzw. eine vollautomatisierte Steuerung und/oder Regelung des Betriebs der Fertigungseinrichtung 10 implementieren. Insbesondere können Steuer- und/oder Regelkreise implementiert werden, gemäß welchen die Steuer- und/oder Regeleinrichtung 40 aktuelle oder künftige Drehzahlen des Ausbringelements 33 kontinuierlich, quasikontinuierlich oder diskontinuierlich ermittelt und auf Grundlage dieser kontinuierlich, quasikontinuierlich oder diskontinuierlich eine entsprechende Einstellung der Drehzahl der Extruderschnecke 22 ausführt.

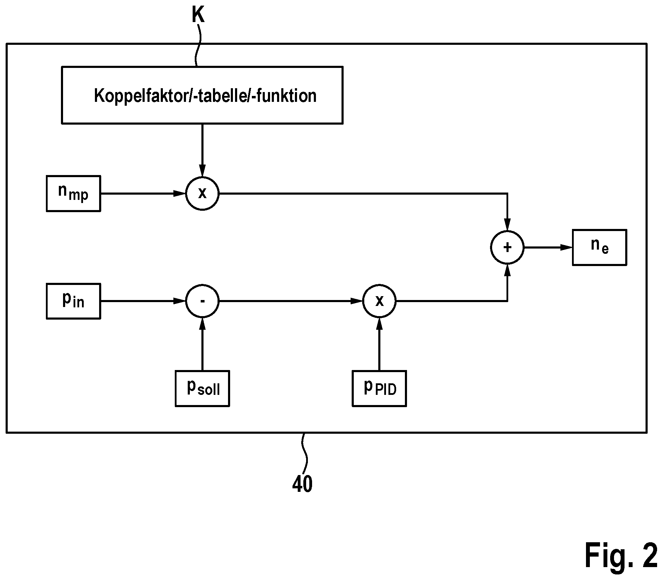

Fig. 2 zeigt eine Prinzipdarstellung einer Steuer- und/oder Regeleinrichtung 40 einer Fertigungseinrichtung 10 zur extrusionsbasierten Fertigung eines dreidimensionalen Bauteils gemäß einem Ausführungsbeispiel.

Fig. 2 veranschaulicht insbesondere, dass die Steuer- und/oder Regeleinrichtung 40 als Eingangsgrößen eine Drehzahl nₘₚ des Ausbringelements 33, d. h. insbesondere einen Ist- oder Solldrehzahl des Ausbringelements 33, und wenigstens einen Koppelfaktor K erhalten kann, aus welchem sich eine Solldrehzahl n_{E} der Extruderschnecke 22 ermitteln lässt (vgl. den oberen Ast in der Prinzipdarstellung). Fig. 2 veranschaulicht weiter, dass die Steuer- und/oder Regeleinrichtung 40 zudem z. B. einen Ist-Druck pᵢₙ vor der Ausbringeinheit 30, einen Solldruck pₛₒₗₗ vor der Ausbringeinheit sowie optional einen Proportionalfaktor eines Reglers, wie z. B. eines PID-Reglers, als Eingangsgrößen erhalten kann, welche ebenso in die Ermittlung der Solldrehzahl n_{E} der Extruderschnecke 22 eingehen können.

Der Koppelfaktor K einer Koppelfunktion kann in einem bestimmten Betriebsmodus der Fertigungseinrichtung 10 automatisierbar bzw. automatisch ermittelt werden. Ein entsprechender Betriebsmodus kann als Koppelfaktorermittlungsmodus bezeichnet bzw. erachtet werden. In analoger Weise kann der Koppelfaktor K während des normalen Betriebs der Fertigungseinrichtung 10, d. h. während der extrusionsbasierten additiven Fertigung eines dreidimensionalen Objekts, automatisierbar bzw. automatisch angepasst bzw. eingestellt werden.

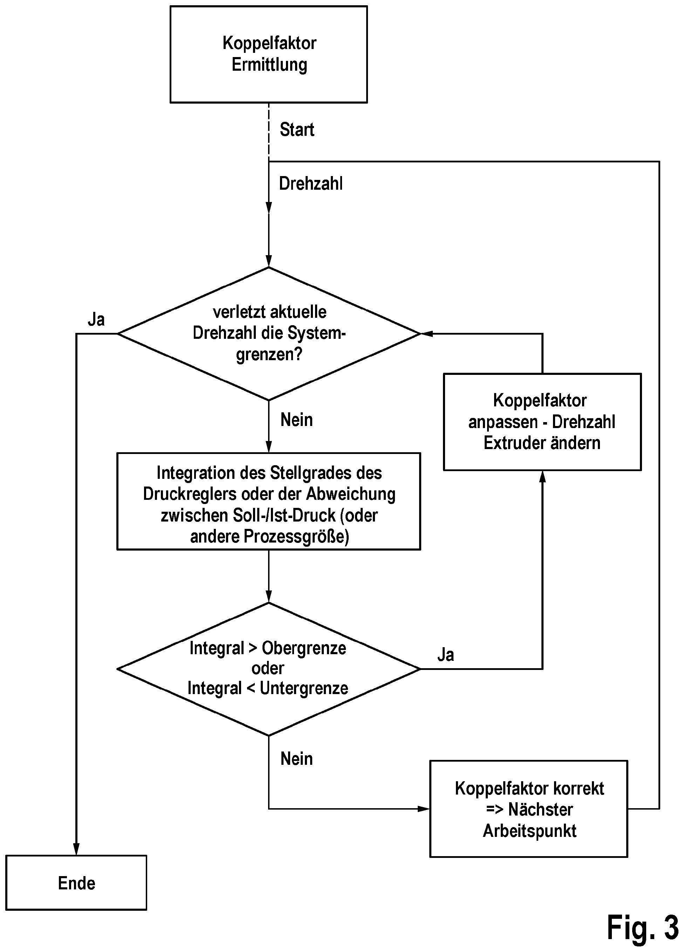

Fig. 3 zeigt ein Blockdiagramm zur Veranschaulichung eines Verfahrens gemäß einem Ausführungsbeispiel, wobei ein entsprechender Koppelfaktorermittlungsmodus zur Ermittlung eines oder mehrerer Koppelfaktoren K bzw. einer Koppelfunkton implementiert wird.

Anhand von Fig. 3 ist ersichtlich, dass im Rahmen eines entsprechenden Betriebsmodus insbesondere folgende Schritte durchgeführt werden können: (i) Ermittlung, ob eine aktuelle Drehzahl vordefinierte Systemgrenzen, wie z. B. Achsgrenzen, der Extrusionseinheit 20 überschreitet, (ii) Ermittlung, einer eine Integration eines aktuellen Stellgrads eines Druckreglers oder eines Integrals zwischen einem Prozessparameter eines vermittels der Fertigungseinrichtung durchführbaren Fertigungsprozesses, (iii) Ermitteln, ob das Integral innerhalb vordefinierter Grenzen liegt, (iv) Definieren eines Koppelfaktors, wenn das Integral innerhalb der vordefinierten Grenzen liegt, (v) Anpassen bzw. Ändern der Drehzahl, wenn das Integral außerhalb der vordefinierten Grenzen liegt; (vi) gegebenenfalls ein- oder mehrfaches Wiederholen der vorgenannten Schritte (i) - (v).

Die Extruderschnecke 22 kann im Rahmen des Koppelfaktorermittlungsmodus in unterschiedlichen Drehzahlabfolgen betrieben werden. Mithin kann die Extruderschnecke 22 mit von einer Anfangsdrehzahl bis zu einer Enddrehzahl, insbesondere stufenweise, ansteigenden Drehzahlen betrieben werden. Sodann kann die Extruderschnecke 22 mit von der Enddrehzahl bis zu der Anfangsdrehzahl, insbesondere stufenweise, absteigenden Drehzahlen betrieben werden. Die hierbei ermittelten Werte können derart plausibiliert und zur Bestimmung einer oder mehrerer Koppelfaktoren gemittelt werden.

Der Koppelfaktorermittlungsmodus kann programmtechnisch in der Steuer- und/oder Regeleinrichtung 40 hinterlegt sein bzw. werden und somit, wie erwähnt, über die Steuer- und/oder Regeleinrichtung 40 implementiert werden.

## Patentansprüche

1. Verfahren zur Steuerung und/oder Regelung des Betriebs einer Fertigungseinrichtung zur extrusionsbasierten additiven Fertigung eines dreidimensionalen Bauteils vermittels einer hardware- und/oder softwaremäßig implementierten Steuer- und/oder Regeleinrichtung, wobei die Fertigungseinrichtung eine Extrusionseinheit zum Aufschmelzen eines Extrusionsmaterials mit einer um eine Drehachse drehbar antreibbaren Extruderschnecke und eine der Extrusionseinheit nachgeschaltet angeordnete Ausbringeinheit zum Ausbringen von aufgeschmolzenem Extrusionsmaterial auf einen Untergrund mit wenigstens einem um eine Drehachse drehbar antreibbaren Ausbringelement aufweist, **dadurch gekennzeichnet, dass** die Steuer- und/oder Regeleinrichtung die Drehzahl der Extruderschnecke auf Grundlage der Drehzahl des wenigstens einen Ausbringelements einstellt.

2. Verfahren nach Anspruch 1, wobei die Steuer- und/oder Regeleinrichtung die Drehzahl der Extruderschnecke auf Grundlage der Drehzahl des wenigstens einen Ausbringelements steuert oder regelt.

3. Verfahren nach Anspruch 1 oder 2, wobei die Steuer- und/oder Regeleinrichtung die Drehzahl der Extruderschnecke auf Grundlage der Drehzahl des Ausbringelements einstellt, indem eine vermittels einer Erfassungseinrichtung erfasste Drehzahl des wenigstens einen Ausbringelements einer dieser Drehzahl gemäß einer Zuordnungsfunktion zugeordneten Drehzahl der Extruderschnecke zugeordnet wird.

4. Verfahren nach Anspruch 3, wobei die Zuordnungsfunktion wenigstens einen dynamischen oder statischen Koppelfaktor umfasst, über welchen eine erfasste Drehzahl des wenigstens einen Ausbringelements mit einer Drehzahl der Extruderschnecke gekoppelt ist.

5. Verfahren nach Anspruch 3 oder 4, wobei die Zuordnungsfunktion, insbesondere eine wenigstens einen Koppelfaktor umfassende Koppelfunktion, unter Berücksichtigung von einem oder mehreren Parametern des Extrusionsmaterials und/oder von einem oder mehreren Parametern des vermittels der Fertigungseinrichtung ausführbaren oder ausgeführten Fertigungsprozesses und/oder von einem oder mehreren Parametern der Fertigungseinrichtung erzeugt oder eingestellt wird.

6. Verfahren nach Anspruch 4 oder 5, wobei der wenigstens eine Koppelfaktor auf Grundlage von experimentellen Untersuchungen oder computerimplementiert, insbesondere per computerimplementierter Simulation, ermittelt wird.

7. Verfahren nach einem der vorhergehenden Ansprüche, wobei die Steuer- und/oder Regeleinrichtung mit einer Datenspeichereinrichtung verbunden ist, in welcher bestimmte Drehzahlen oder Drehzahlbereiche des wenigstens einen Ausbringelements mit bestimmten Drehzahlen oder Drehzahlbereichen der Extruderschnecke, insbesondere über den wenigstens einen Koppelfaktor, verknüpft korreliert sind.

8. Verfahren nach einem der vorhergehenden Ansprüche, wobei die Steuer- und/oder Regeleinrichtung die Einstellung der Drehzahl der Extruderschnecke auf Grundlage der Drehzahl der Ausbringeinheit automatisierbar oder automatisch ausführt.

9. Verfahren nach einem der vorhergehenden Ansprüche, wobei der wenigstens eine Koppelfaktor einem bestimmten Betriebsmodus der oder einer Fertigungseinrichtung automatisierbar ermittelt wird.

10. Verfahren nach Anspruch 9, wobei in dem Betriebsmodus folgende Schritte durchgeführt werden:
(i) Ermittlung, ob eine aktuelle Drehzahl vordefinierte Achsgrenzen der Extrusionseinheit überschreitet,
(ii) Ermittlung, einer eine Integration eines aktuellen Stellgrads eines Druckreglers oder eines Integrals zwischen einem Prozessparameter eines vermittels der Fertigungseinrichtung durchführbaren Fertigungsprozesses,
(iii) Ermitteln, ob das Integral innerhalb vordefinierter Grenzen liegt,
(iv) Definieren eines Koppelfaktors, wenn das Integral innerhalb der vordefinierten Grenzen liegt,
(v) Anpassen bzw. Ändern der Drehzahl, wenn das Integral außerhalb der vordefinierten Grenzen liegt;
(vi) gegebenenfalls ein- oder mehrfaches Wiederholen der vorgenannten Schritte (i) - (v).

11. Verfahren nach Anspruch 10, wobei die Extruderschnecke im Rahmen des Betriebsmodus in unterschiedlichen Drehzahlabfolgen betrieben wird, wobei die Extruderschnecke mit von einer Anfangsdrehzahl bis zu einer Enddrehzahl, insbesondere stufenweise, ansteigenden Drehzahlen betrieben wird, sodann mit von der Enddrehzahl bis zu der Anfangsdrehzahl, insbesondere stufenweise, absteigenden Drehzahlen betrieben wird, worauf die hierbei ermittelten Werte plausibiliert und/oder zur Bestimmung eines oder mehrerer Koppelfaktoren gemittelt werden.

12. Verfahren nach einem der vorhergehenden Ansprüche, wobei die Steuer- und/oder Regeleinrichtung die Einstellung der Drehzahl der Extruderschnecke auf Grundlage der Drehzahl der Ausbringeinheit unter Berücksichtigung eines Zielkriteriums vornimmt, wobei das Zielkriterium ein bestimmtes Druckniveau des Extrusionsmaterials an einem Eingang der Ausbringeinheit und/oder in einem Bereich zwischen dem Eingang der Ausbringeinheit und einem der Ausbringeinheit zugewandten Ausgang der Extrusionseinheit und/oder an einem der Ausbringeinheit zugewandten Ausgang der Extrusionseinheit betrifft.

13. Fertigungseinrichtung zur extrusionsbasierten additiven Fertigung eines dreidimensionalen Bauteils, wobei die Fertigungseinrichtung eine Extrusionseinheit zum Aufschmelzen eines Extrusionsmaterials mit einer um eine Drehachse drehbar antreibbaren Extruderschnecke, eine der Extrusionseinheit nachgeschaltet angeordnete Ausbringeinheit zum Ausbringen von aufgeschmolzenem Extrusionsmaterial auf einen Untergrund mit wenigstens einem um eine Drehachse drehbar antreibbaren Ausbringelement und eine Steuer- und/oder Regeleinrichtung zur Steuerung oder Regelung des Betriebs der Fertigungseinrichtung aufweist, **dadurch gekennzeichnet, dass** die Steuer- und/oder Regeleinrichtung eingerichtet ist, die Drehzahl der Extruderschnecke auf Grundlage der Drehzahl des wenigstens einen Ausbringelements einzustellen.

14. Steuer- und/oder Regeleinrichtung für eine Fertigungseinrichtung nach Anspruch 13, wobei die Steuer- und/oder Regeleinrichtung eingerichtet ist, die Drehzahl der Extruderschnecke auf Grundlage der Drehzahl des wenigstens einen Ausbringelements einzustellen.
